# FASCICULE DE BREVET EUROPEEN

(11) **EP 0 349 393 B1**
(45) Date de publication et mention de la délivrance du brevet: **20.10.1993**
(21) Numéro de dépôt: 89401769.8
(22) Date de dépôt: 22.06.1989
(51) Int. Cl.: H01H 13/72, H04M 1/08

(54) **Commutateur à double action**
Schalter mit doppelter Wirkung
Double action switch

(30) Priorité: 28.06.1988 FR 8808793
(43) Date de publication de la demande: 03.01.1990
(73) Titulaire: CROUZET Automatismes, 26000 Valence (FR)
(72) Inventeur: Perez-Ruiz, José-Maria, E-08032 Barcelone (ES); Mendoza-Mendoza, Andres, E-08902 Hospitalet De Llobregat (ES)
(74) Mandataire: Bloch, Gérard

(56) Documents cités:
- EP-A- 0 059 331
- DE-A- 2 146 660
- DE-A- 2 830 661
- DE-C- 3 529 652

## Description

La présente invention concerne un commutateur à double interaction comportant une série d'ensembles contacteurs commandables par deux leviers, l'un monostable, l'autre bi-stable, déplaçables, chacun, d'une première position à une deuxième respectivement par un premier et un second organes d'actionnement, le levier bi-stable étant agencé pour pouvoir être verrouillé dans sa deuxième position par des moyens de verrouillage, le levier monostable pouvant être déplacé dans sa deuxième position quand le levier bi-stable se trouve aussi dans sa deuxième position, l'actionnement par le second organe du levier bi-stable, quand il se trouve dans sa deuxième position, provoquant son retour dans sa première position et le retour,sous l'action du premier organe, du levier monostable de sa deuxième position à sa première position, quand le levier bi-stable se trouve dans sa deuxième position, provoquant le retour du levier bi-stable dans sa première position.

L'invention est relative en particulier aux dispositifs de commutation électrique destinés à l'équipement des postes récepteurs téléphoniques et notamment de ceux dits à utilisation mains libres, pour lesquels il n'est pas nécessaire à l'utilisateur de décrocher le combiné téléphonique pour s'entretenir avec son correspondant.

Dans un poste récepteur téléphonique, la communication s'établit généralement au travers d'une ligne téléphonique bifilaire.

Lorsque le poste récepteur téléphonique est en position d'attente, ou de repos, la ligne bifilaire est reliée au dispositif d'avertissement d'appel, généralement un timbre.

Lors d'un appel téléphonique actionnant le dispositif d'avertissement, l'utilisateur décroche le combiné téléphonique et un commutateur déconnecte la ligne téléphonique du dispositif d'avertissement pour la connecter aux organes de communication composés de façon classique d'un microphone et d'un écouteur. Certains postes récepteurs téléphoniques comprennent un dispositif permettant à l'utilisateur de converser avec son correspondant sans avoir à décrocher le combiné téléphonique. De tels récepteurs, appelés communément "mains libres", comprennent un commutateur bi-stable qui, lors de la réception de l'appel téléphonique, déconnecte, généralement sous l'action d'un poussoir manoeuvré par l'utilisateur, la ligne téléphonique du dispositif d'avertissement pour la connecter aux organes de communication amplifiés comprenant notamment un microphone et un haut-parleur et permettant à l'utilisateur de converser en gardant la liberté de ses deux mains ou encore permettant une conversation à plus d'un interlocuteur. En fin de conversation, la ligne téléphonique est déconnectée des organes de communication pour être reconnectée au dispositif d'avertissement par un nouvel actionnement du commutateur bi-stable.

Il existe également sur le marché des postes récepteurs téléphoniques où la fonction "mains libres" est combinée avec la fonction classique de décrochage-raccrochage du combiné téléphonique. Le raccrochage du combiné téléphonique peut manoeuvrer le commutateur "mains libres" par actionnement de son poussoir de commande au travers de renvois mécaniques complexes.

On connaît déjà un commutateur du type mentionné ci-dessus par le document DE-A-2 830 661. Toutefois, le commutateur de ce document est d'un encombrement important, ne serait-ce que parce que ses moyens de verrouillage et de déverrouillage sont au moins en partie disposés à l'extérieur du boîtier du commutateur.

Le document DE-A-3 529 652 enseigne aussi un commutateur assez similaire à celui du type mentionné ci-dessus, mais de réalisation mécanique compliquée, peu fiable et coûteuse.

La présente invention vise donc à perfectionner ces commutateurs de l'art antérieur et à proposer un commutateur à double interaction compact, de réalisation simple, fiable et économique.

A cet effet, la présente invention concerne un commutateur du type mentionné ci-dessus, caractérisé par le fait que les dits moyens de verrouillage comprennent une tige pourvue de moyens agencés pour coopérer avec des moyens associés du levier bi-stable pour le verrouiller dans sa deuxième position, la tige étant montée pour pivoter sous l'action, d'une part, de moyens de déverrouillage du levier bi-stable et, d'autre part, de moyens de déverrouillage du levier monostable et libérer ainsi les moyens de verrouillage de la tige des moyens de verrouillage associés du levier bi-stable.

Avantageusement, les leviers sont déplaçables selon des axes parallèles et la tige de verrouillage est montée pivotante dans un plan parallèle aux axes de déplacement des leviers.

De préférence, la tige porte un téton de verrouillage et, le levier bi-stable, une saillie associée en forme de V, le levier monostable porte une saillie disposée pour faire pivoter une extrémité recourbée de la tige de verrouillage et le levier bi-stable comporte un labyrinthe avec les parois duquel le téton de la tige peut coopérer pour faire pivoter la tige, la saillie étant disposée à l'intérieur du labyrinthe.

l'invention sera mieux comprise grâce à la description suivante de deux formes de réalisation préférées du commutateur de l'invention, plus spécialement destiné à l'équipement d'un poste récepteur téléphonique pourvu d'un timbre avertisseur, d'un combiné téléphonique et son système classique de décrochage-raccrochage, d'un amplificateur avec son microphone et son haut parleur et de sa commande "mains libres", en référence aux dessins annexés sur lesquels
- la figure 1 représente une vue en coupe de la première forme de réalisation du commutateur de l'invention en combinaison avec le synoptique électrique correspondant ;
- la figure 2 représente une vue en perspective du commutateur de la figure 1 ;
- la figure 3 représente deux vues orthogonales d'une première forme de réalisation de lame contact ;
- la figure 4 représente deux vues orthogonales d'une seconde forme de réalisation de lame contact ;
- la figure 5 représente une vue partielle du mécanisme de verrouillage - déverrouillage mutuel de la commande du combiné et de la commande "mains libres" et
- les figures 6a et 6b représentent deux vues orthogonales d'une variante de réalisation du commutateur, équipé de leviers de liaison avec les dispositifs de manoeuvre d'un poste récepeur téléphonique.

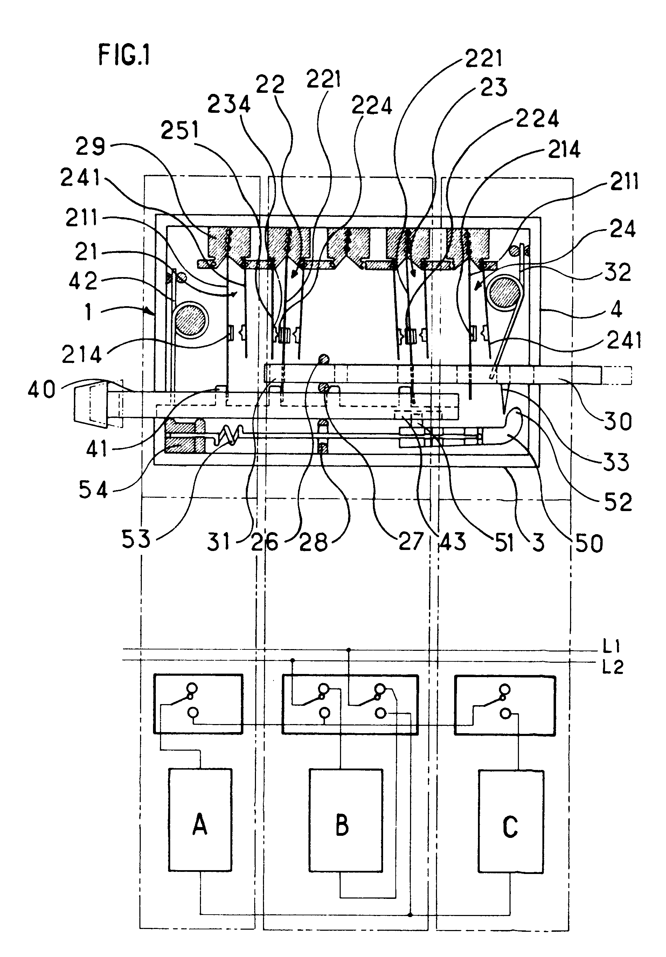

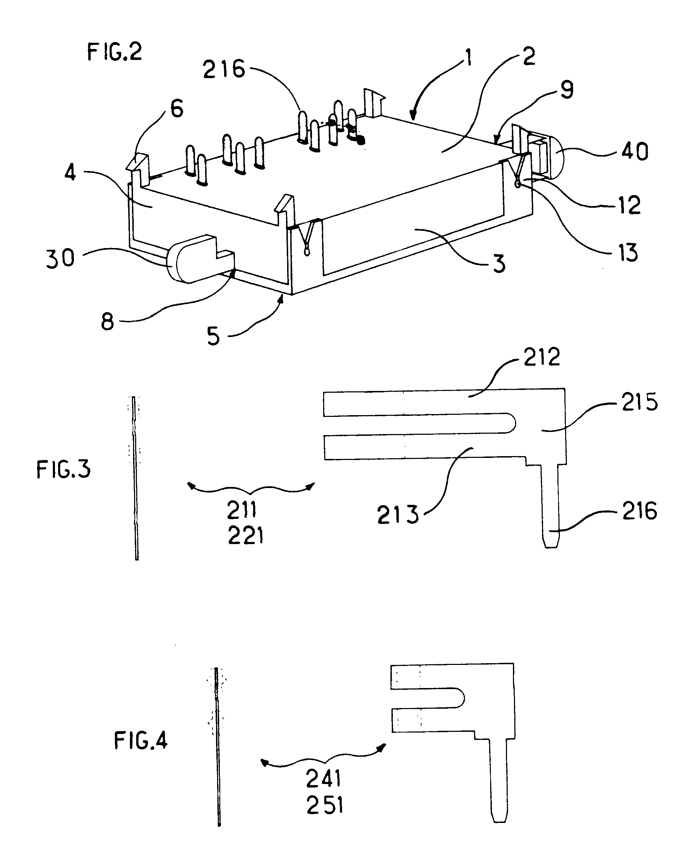

Comme le montre la figure 2, le commutateur de l'invention comporte un boîtier parallélépipédique 1, ici réalisé en matière plastique rigide, comprenant un fond 2, deux grands côtés latéraux 3 et deux petits côtés latéraux 4 et un couvercle 5. Chaque petite arête des côtés du boitier est prolongée par un pied 6 comportant en bout un ergot sensiblement triangulaire destiné au montage, ici par enclipsage, du commutateur sur son support, en général, le circuit imprimé du récepeur téléphonique. Le fond 2 est percé du nombre de trous nécessaire pour laisser passer les prolongements, abordés plus loin, des lames de contact et permettre leur raccordement avantageusement par soudure, sur le circuit imprimé du récepteur. Chacun des petits côtés 4 est percé d'une ouverture 8, 9 pour permettre le passage de moyens de commande 30, 40 des lames contacts : d'un côté, le moyen monostable 30 transmettant la commande du combiné, de l'autre côté, le moyen bistable 40 relié par exemple à un poussoir assurant la fonction "mains libres". Le couvercle 5 est fixé par enclipsage ici de quatre pattes 12 sur quatre pivots 13 prévus sur les grands côtés 3 du boîtier, proches des arêtes de raccordement avec les petits côtés 4. En référence à la figure 1, l'intérieur du boîtier 1 comprend un bloc unique de moyens de contacts électriques 21, 22, 23, 24, les moyens de manoeuvre 30, 40 desdits mêmes contacts, le dispositif de verrouillage et de déverrouillage mutuel desdits moyens de manoeuvre et des moyens 32, 42 de rappel en position desdits moyens de manoeuvre.

Les moyens de contacts électriques comprennent, ici, successivement et suivant des plans parallèles aux petits côtés 4 du boîtier 1, un contact simple 21, deux contacts inverseurs 22, 23, un contact simple 24.

Chaque contact simple 21, 24 comprend une première lame souple métallique 211, en forme de fourche à deux branches parallèles 212, 213. Sur chacune, en position sensiblement médiane, est fixé, ici par soudure, un plot de contact 214, ici découpé dans un profilé métallique, la base 215 de la fourche étant maintenue par pincement entre des protubérances 29 faisant saillie hors du fond du boîtier. Un prolongement 216 de la base 215 s'étend perpendiculairement aux branches 212, 213 et est engagé dans un trou ménagé dans le fond 2 du boîtier, entre les protubérances 29, pour permettre sa soudure sur le circuit imprimé support du commutateur.

Chaque contact simple 21, 24 comprend aussi une seconde lame souple métallique 241 semblable à la première lame 211 mais de branches parallèles plus courtes et comprenant des plots de contact disposés sensiblement en bout desdites branches en regard des plots des lames 211 afin d'assurer le contact électrique lorsqu'ils sont manoeuvrés en appui mutuel.

Chacun des deux contacts inverseurs 22,23 comprend une lame souple 221, semblable aux lames 211 des contacts simples 21, 24, avec pour seule différence le fait que chaque branche comprend de plus un plot de contact 224 symétrique du plot 214 par rapport au plan de la branche. Chaque contact inverseur comporte aussi une lame souple 241, identique à la lame souple 241 des contacts simples, et une lame souple 251, semblable à la lame souple 241, mais dont chaque branche comprend un plot de contact électrique 234 situé en position symétrique par rapport au plan de la lame.

Le premier moyen de commande 30 comporte un levier sensiblement en forme de parallélépipède très allongé et de section transversale sensiblement carrée, monté mobile en translation suivant un axe parallèle aux grands côtés 3 du boîtier 1 dans un plan proche du couvercle 5 dudit boîtier 1, guidé par deux plots 26, 27 en saillie hors du fond 2 dudit boîtier 1, et traversant l'un des petits côtés 4 dudit boîtier 1.

Le levier 30 comporte des protubérances 31 en forme de dents orthogonales à la face du levier 30 tournée vers le fond du boîtier et dont les extrémités prennent appui sur ledit fond pour maintenir le levier 30 selon son plan de mobilité. Lesdites protubérances coopèrent par contact avec les extrémités des lames de contact de grande longueur 211, 221 des contacts 22, 23, 24 afin d'établir, lors de la manoeuvre de translation du levier 30, l'ouverture ou la fermeture desdits contacts ainsi qu'il sera décrit plus loin.

Un moyen élastique de rappel, ici un ressort, 32 tend à rappeler le levier 30 dans sa position stable, c'est-à-dire, suivant la figure 1, en position sortie au maximum vers la droite, par une saillie 33 dudit levier formant butée, en appui contre la paroi interne du côté du boîtier traversé par le levier 30.

Un second moyen de commande 40 comporte un tiroir, ou levier, très allongé, également monté mobile en translation suivant un axe parallèle aux grands côtés 3 du boîtier 1, dans un plan proche du couvercle 5, guidé par deux plots 27, 28 et traversant l'autre des petits côtés 4 du boîtier 1. La largeur du tiroir 40 est sensiblement égale à l'épaisseur interne du boîtier 1 de manière à être guidé par les faces internes du fond 2 et du couvercle 5 du boîtier 1.

Le tiroir 40 comprend quatre butées 41 en forme de créneau s'élevant sur toute la largeur du tiroir 40 dans des plans parallèles entre eux et orthogonaux à l'axe de translation du tiroir 40. Trois des butées 41 coopèrent avec les extrémités des grandes lames de contacts 21, 22, 23, afin d'établir, lors de la manoeuvre en translation du levier 40, l'ouverture ou la fermeture de ces contacts ainsi qu'il sera décrit plus loin. Une quatrième butée 41 coopère par contact avec le plot 27 pour limiter la course en position sortie du tiroir 40. Un moyen de rappel élastique, ici un ressort, 42 tend à rappeler le tiroir 40 en position sortie.

Une empreinte 43, en forme de labyrinthe, est ménagée dans le plan du fond du tiroir 40 sensiblement vers son extrémité interne au boîtier 1.

Le labyrinthe 43 comprend sensiblement en position médiane, une saillie ou rampe de verrouillage 44 en forme de V à branches dissymétriques, les contours de cette saillie 44 et les parois du labyrinthe 43 coopérant par contact avec un téton 51 d'un organe pivotant 50 de verrouillage/déverrouillage mutuel des organes de commande 30, 40.

L'organe de verrouillage/déverrouillage 50 est en forme de levier dont l'une 52 des extrémités est recourbée en forme de bec à profil de came pour coopérer par contact avec la saillie 33 du levier 30.

Le téton 51, en saillie perpendiculairement au plan de pivotement de l'organe 50, est maintenu engagé dans le labyrinthe 43 par l'action d'une tige semi-rigide élastique 53 fixée ici par emmanchement à force dans une protubérance interne 54 du boîtier 1.

La tige 53 permet au levier 50 de se déplacer dans un plan parallèle au fond 2 du boîtier 1 selon un angle ayant pour sommet le point de fixation de ladite tige mais ne permet pas de translation du levier 50 selon son axe longitudinal. En référence à la figure 1, le levier 30, c'est-à-dire le moyen de commande monostable associé au combiné téléphonique, est représenté en position rentrée, c,est-à-dire combiné raccroché, le levier 40, c'est-à-dire le moyen de commande bistable associé à la fonction "mains libres", est représenté en position sortie qui correspond à l'attente d'un appel téléphonique. Le contact 21 permet de relier la ligne téléphonique au circuit électronique A du microphone et du haut-parleur de la position mains libres, le contact 24 permet de relier la ligne téléphonique au circuit C du combiné téléphonique, les deux contacts inverseurs 22,23 permettent de commuter la ligne téléphonique du circuit du timbre avertisseur B sur au moins un des circuits A ou C de conversation utilisé.

A partir de la disposition de la figure 1, téléphone en attente d'appel, les séquences suivantes peuvent se présenter : le timbre B sonne, si l'utilisateur décroche le combiné, le levier 30 passe en position sortie, le contact 24 se referme, les contacts 22, 23 sont inversés, la conversation s'établit.

Si l'utilisateur avait utilisé le levier mains libres 40 en l'actionnant vers la position rentrée, le levier 40 aurait fermé le contact 21 et inversé les contacts 22, 23 et la rampe 44 serait venue derrière le téton 51 après avoir fait pivoter la tige 53, le téton 51 venant entre les deux branches du V de la saillie 44. L'utilisateur peut utiliser à la fois le combiné C et le dispositif mains libres A.

Quand le levier "mains libres" 40 est en position rentrée, verrouillé par sa rampe 44 sur le téton 51, une nouvelle pression sur celui-ci fait parcourir au téton 51 le labyrinthe 43 et notamment sa rampe 43′ ce qui fait pivoter la tige 53 et déverrouille le levier 40 qui revient en position sortie.

De même, quand le levier "mains libres" 40 est en position rentrée et que le levier 30 est en position sortie, combiné décroché, en raccrochant le combiné, la saillie 33 coopère par contact avec le profil 52 qui pivote légèrement dans un plan parallèle à celui du fond 2 du boîtier 1, le téton 51 est alors libéré de la saillie 44 et libère le levier 40 en position déverrouillée, c'est-à-dire sortie.

Les leviers du commutateur décrit ci-dessus peuvent agir ensembles ou séparément sur tout ou partie des mêmes contacts. Ceci permet de réaliser des fonctions électriques communes ou séparées et de réduire le nombre de contacts nécessaires pour réaliser toutes les fonctions désirées.

Le nombre des contacts peut être modifié pour adapter le dispositif aux spécificités de chaque poste récepteur téléphonique. Le commutateur de l'invention permet de réaliser un ensemble électromécanique compact en réunissant les fonctions de deux blocs commutateurs séparés et présentant des facilités de mise en oeuvre déterminantes pour le constructeur de postes récepteurs téléphoniques. C'est ainsi, notamment, que la manoeuvre en translation des moyens de commande, dans un plan parallèle à celui du circuit imprimé sur lequel le commutateur est monté, ne rend pas nécessaire le positionnement du commutateur précisément sous le poussoir mains libres lorsque l'espace n'est pas suffisant. C'est ainsi encore que les ressorts de rappel des moyens de commande sont incorporés au commutateur ainsi que le dispositif de verrouillage/déverrouillage mutuel de ces moyens.

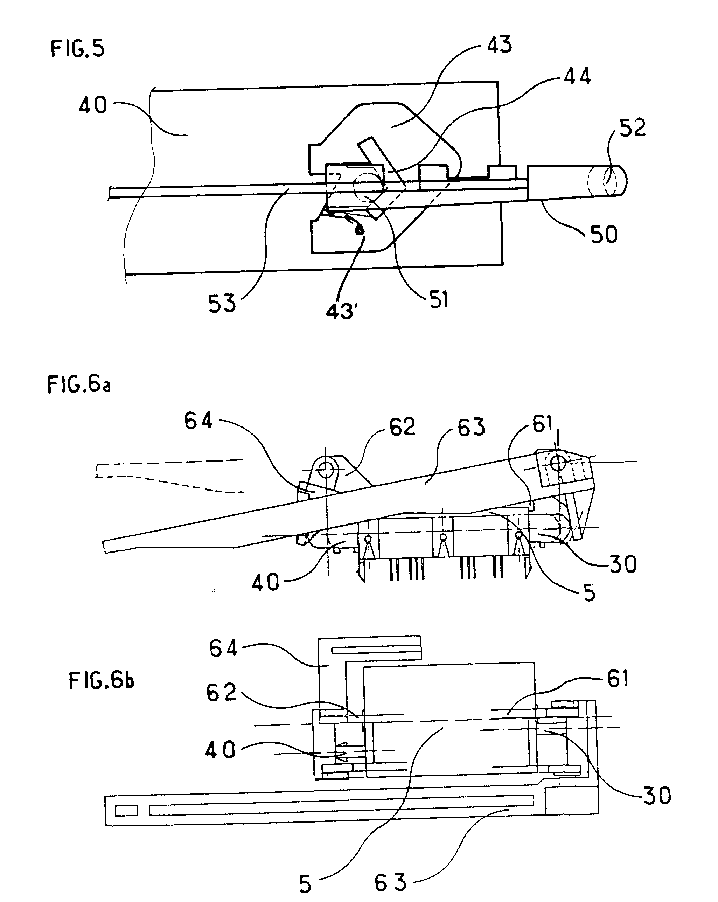

Un autre avantage de l'invention réside dans la qualité des contacts électriques. Ils peuvent être en effet revêtus de matériaux précieux, tel l'argent ou l'or, et être réalisés sur deux plots en parallèle. La simultanéité de leurs mouvements n'étant par rigoureusement obtenue, le premier des deux plots qui se ferme, et qui sera donc le dernier à s'ouvrir, absorbe toute la charge de courant avec les risques afférants, notamment usure, étincelage, charbonnage, et le second des deux plots qui se ferme, qui sera donc le premier à s'ouvrir, assure une haute qualité de contact. Un autre avantage de commutateur de l'invention est encore de pouvoir s'adapter aisément, par exemple par changement du couvercle 5, aux exigences mécaniques ou d'encombrement des divers postes récepteurs téléphoniques du marché. Les figures 6a et 6b illustrent une variante de réalisation du commutateur de l'invention, avec un couvercle qui comprend deux chapes 61, 62, sur chacune desquelles s'articule un levier coopérant, l'un 63, avec le moyen de commande monostable 30, afin de le mouvoir en translation, et avec le dispositif de décroché-raccroché, l'autre 64, avec le moyen de commande bistable 40, afin de le mouvoir en translation, et avec le dispositif "mains libres". Dans ce cas, le couvercle 5 comprend six pattes de fixation au lieu de quatre comme décrit précédemment afin d'en augmenter la rigidité.

De cette façon, et toujours dans ce cas, par simple changement du couvercle supérieur, on peut obtenir des points d'appui et d'articulation des leviers qui transmettent les mouvements depuis des points d'actionnement externes du poste téléphonique (combiné et touche mains libres).

## Revendications

1. Commutateur à double interaction comportant une série d'ensembles contacteurs (21-24) commandables par deux leviers (30,40), l'un (30) monostable, l'autre (40) bi-stable, déplaçables, chacun, d'une première position à une deuxième position respectivement par un premier et un second organes d'actionnement, le levier bi-stable (40) étant agencé pour pouvoir être verrouillé dans sa deuxième position par des moyens de verrouillage (43, 44, 50-53), le levier monostable (30) pouvant être déplacé dans sa deuxième position quand le levier bi-stable (40) se trouve aussi dans sa deuxième position, l'actionnement par le second organe du levier bi-stable (40), quand il se trouve dans sa deuxième position, provoquant son retour dans sa première position et le retour, sous l'action du premier organe, du levier monostable (30) de sa deuxième position à sa première position, quand le levier bi-stable (40) se trouve dans sa deuxième position, provoquant le retour du levier bi-stable (40) dans sa première position, commutateur caractérisé par le fait que les dits moyens de verrouillage comprennent une tige (53, 50) pourvue de moyens (51) agencés pour coopérer avec des moyens associés (44) du levier bi-stable (40) pour le verrouiller dans sa deuxième position, la tige (53,50) étant montée pour pivoter sous l'action, d'une part, de moyens de déverrouillage (43) du levier bi-stable (40) et, d'autre part, de moyens de déverrouillage (33) du levier monostable (30) et libérer ainsi les moyens de verrouillage (51) de la tige (53,50) des moyens de verrouillage associés (44) du levier bi-stable (40).

2. Commutateur selon la revendication 1, dans lequel les leviers (30,40) sont déplaçables selon des axes parallèles et la tige de verrouillage (53,50) est montée pivotante dans un plan parallèle aux axes de déplacement des leviers (30,40).

3. Commutateur selon l'une des revendications 1 et 2, dans lequel la tige (50,53) porte un téton de verrouillage (51) et, le levier bi-stable (40), une saillie associée (44) en forme de V.

4. Commutateur selon l'une des revendications 1 à 3, dans lequel le levier monostable (30) porte une saillie (33) disposée pour faire pivoter une extrémité recourbée (52) de la tige de verrouillage (53,50).

5. Commutateur selon l'une des revendications 3 et 4, dans lequel le levier bi-stable (40) comporte un labyrinthe (43) avec les parois duquel le téton (51) de la tige (50,53) peut coopérer pour faire pivoter la tige (50,53).

6. Commutateur selon la revendication 5, dans lequel la saillie (44) est disposée à l'intérieur du labyrinthe (43).

## Claims

1. A double interaction switch, comprising a plurality of contact assemblies (21-24) controllable by two levers (30,40) one (30), the other (40) monostable, bistable, each being movable from a first position to a second position by respective first and second actuating members, the bistable lever (40) being formed to be locked in its second position by locking means (43,44,50-53), the monostable lever (30) being movable to its second position when the bistable lever (40) is also in its second position, actuation by the second member of the bistable lever (40), when it is in its second position, causing its return to its first position, and the return, under the action of the first member, of the monostable lever (30) from its second position to its first position, when the bistable lever (40) is in its second position, causing return of the bistable lever (40) to its first position, switch characterized by the fact that said locking means comprises a rod (53,50) provided with means (51) arranged for cooperating with means (44) associated with the bistable lever (40) for locking it in its second position, the rod (53,50) being mounted for pivoting under the action, on the one hand, of means (43) for unlocking the bistable lever (40) and, on the other hand, of means (33) for unlocking the monostable lever (30) and thereby freeing the means (51) locking the rod (53,50) from the associated means (44) for locking the bistable lever (40).

2. The switch as claimed in claim 1, wherein the levers (30,40) are movable along parallel axes and the locking rod (53,50) is mounted for pivoting in a plane parallel to the axes of movement of the levers (30,40).

3. The switch as claimed in one of claims 1 and 2, wherein the rod (50,53) is provided with a locking pin (51) and the bistable lever (40) has an associated V-shaped projection.

4. The switch as claimed in one of claims 1 to 3, wherein the monostable lever (30) has a projection (33) disposed to cause a curved end (52) of the locking rod (53,50) to pivot.

5. The switch as claimed in one of claims 3 and 4 wherein the bistable lever (40) comprises a labyrinth (43) having walls with which the pin (51) of the rod (50,53) can cooperate so as to cause the rod (50,53) to pivot.

6. The switch as claimed in claim 5, wherein the projection (44) is disposed inside the labyrinth (43).

## Patentansprüche

1. Schalter mit doppelter Wirkung umfassend eine Reihe von Schützeinheiten (21 - 24), die durch zwei Hebel (30, 40), einen monostabilen (30) und einen bistabilen (40), steuerbar sind, wobei jeder Hebel aus einer ersten Position in eine zweite Position verschoben werden kann mit Hilfe einer ersten bzw. zweiten Betätigungseinrichtung, wobei der bistabile Hebel (40) in seiner zweiten Position durch Verriegelungsmittel (43, 44, 50-53) verriegelt werden kann und wobei der monostabile Hebel (30) in seine zweite Position verschoben werden kann, wenn sich der bistabile Hebel (40) ebenfalls in seiner zweiten Position befindet, wobei die Betätigung durch die zweite Einrichtung des bistabilen Hebels (40), wenn sich dieser in seiner zweiten Position befindet, dessen Rückstellung in die erste Position bewirkt und wobei die Rückstellung des monostabilen Hebels (30), unter Einwirkung der ersten Einrichtung, aus seiner zweiten in seine erste Position, wenn sich der bistabile Hebel (40) in seiner zweiten Position befindet, die Rückstellung des bistabilen Hebels (40) in seine erste Position bewirkt , Schalter dadurch gekennzeichnet, daß die besagten Verriegelungsmittel einen Stift (53, 50) umfassen, welcher mit Mitteln (51) versehen ist, die mit dem bistabilen Hebel (40) zugehörigen Mitteln (44) zusammenwirken, um diesen in seiner zweiten Position zu verriegeln, wobei der Stift (53, 50) so angebracht ist, daß er einerseits unter der Einwirkung von Entriegelungsmitteln (43) des bistabilen Hebels (40) und andererseits unter der Einwirkung von Entriegelungsmitteln (33) des monostabilen Hebels (30) schwenkt und so die Verriegelungsmittel (51) des Stiftes (53, 50) von den zugehörigen Verriegelungsmitteln (44) des bistabilen Hebels (40) freisetzt.

2. Schalter gemäß Anspruch 1, bei welchem die Hebel (30, 40) an parallelen Achsen entlang verschoben werden können und der Verriegelungsstift (53, 50) schwenkbar in einer zu den Verschiebungsachsen der Hebel (30, 40) parallelen Ebene angeordnet ist.

3. Schalter gemäß einem der Ansprüche 1 und 2, bei welchem der Stift (53, 50) einen Verriegelungszapfen (51) und der bistabile Hebel (40) einen zugehörigen V-förmigen Ansatz (44) aufweist.

4. Schalter gemäß einem der Ansprüche 1 - 3, bei welchem der monostabile Hebel (30) einen Ansatz ((33) aufweist, der vorgesehen ist, um ein gekrümmtes Ende (52) des Verriegelungsstiftes (53, 50) zu schwenken.

5. Schalter gemäß einem der Ansprüche 3 und 4, bei welchem der bistabile Hebel (40) ein Labyrinth (43) umfaßt, mit dessen Wänden der Zapfen (51) des Stiftes (50, 53) zusammenwirken kann, um den Stift (50, 53) zu schwenken.

6. Schalter gemäß Anspruch 5, bei welchem der Ansatz (44) innerhalb des Labyrinths (43) angeordnet ist.
